# EUROPEAN PATENT SPECIFICATION

(11) **EP 2 336 833 B1**
(45) Date of publication and mention of the grant of the patent: **12.06.2013**
(21) Application number: 08877286.8
(22) Date of filing: 10.10.2008
(51) Int. Cl.: G05B 11/36, G05B 11/42

(54) **ADJUSTER**
JUSTIERUNGSVORRICHTUNG
DISPOSITIF D'AJUSTEMENT

(43) Date of publication of application: 22.06.2011
(73) Proprietor: Mitsubishi Electric Corporation, Tokyo 100-8310 (JP)
(72) Inventor: YOSHIKAWA, Hiroshi, Tokyo 100-8310 (JP)
(74) Representative: Zech, Stefan Markus
(86) International application number: PCT/JP2008/068499
(87) International publication number: WO 2010/041338

(56) References cited:
- EP-A2- 0 406 836
- JP-A- 2 213 902
- JP-A- 7 219 601
- JP-A- 2000 155 602
- JP-A- 2004 086 858
- JP-A- 2004 206 515
- JP-B2- 2 531 796
- US-A- 3 938 017
- US-A- 4 268 784
- US-A- 4 303 873

## Description

### TECHNICAL FIELD

The present invention relates to a regulator which is mounted on rail cars to control deceleration.

### BACKGROUND ART

PI or PID (P for Proportional, I for Integral, and D for Derivative) regulators (hereinafter referred to as a "regulator") output operation signals so that the process value (also referred to as the measured value) of a controlled target will agree with the target value. At this time, to avoid the possibility of the controlled target being driven into dangerous conditions, the regulator is provided with an output limiting section for restricting the upper and lower limits or the rate of change of the operation signal.

The operation signal may deviate from a limit value of the output limiting section, thereby causing the limited operation signal or an output from the output limiting section to a controlled target to be saturated. If no action is taken in this case, the limit deviation signal (the operation signal - the limited operation signal) tends to be expanded limitlessly due to the nature of the integral action. Then, at the time of recovery from saturation, the limited operation signal continues to saturate until the operation signal is brought back into the limit range. This may cause an overshoot, i.e., a socalled reset-windup phenomenon to occur. Note that typical regulators perform processing for preventing the reset-windup (hereinafter referred to as the "anti-reset-windup processing") .

For example, as the anti-reset-windup processing, the regulator disclosed in Patent Document 1 shown below stops such integral actions that would otherwise expand the limit deviation signal upon occurrence of saturation.

### PRIOR ART DOCUMENTS

### PATENT DOCUMENTS

Patent Document 1: Japanese Patent No. 2531796 (and family member EP 0 406 836)

### DISCLOSURE OF INVENTION

### PROBLEM TO BE SOLVED BY THE INVENTION

However, in the initial state of saturation of the limited operation signal for a controlled target, the regulator disclosed in Patent Document 1 shown above had a problem when there was a relatively small number of limit deviation signals, and the deviation between the target value of the regulation signal and the process value was being reduced towards "0". More specifically, there would occur a hunting phenomenon in which saturation and desaturation were repeated every control cycle and the limited operation signal varied minutely. Furthermore, the hunting phenomenon led to superimpositions of over-integration by the number of times of toggle actions, causing the reset-windup to occur.

Furthermore, in the regulator disclosed in Patent Document 1, the speed-type integration regulating signal can be made "0" to thereby prevent the limit deviation signal from being expanded; however, the over-integration produced during the cycle in which saturation occurred cannot be eliminated. This led to a problem that, for example, when the target value varied in a stepwise manner, an over-integration remained corresponding to the magnitude of the variations, thereby possibly causing reset windup upon recovery from saturation and thus an overshoot or undershoot to occur.

The present invention was developed in view of the problems mentioned above. It is an object of the present invention to provide a regulator which can stabilize the limited operation signal for a controlled target even in the initial state of saturation of the limited operation signal to the controlled target.

### SUMMARY OF THE INVENTION

The present invention provides a regulator comprising a regulation computing section, an output limiting section, and a computing section, as detailed in independent claim 1. Further embodiments of the invention are realised by the corresponding dependent claims.

### EFFECTS OF THE INVENTION

The regulator of the present invention is configured such that in the event of saturation, the over-integration having occurred during the previous control cycle (the previous over-integration) is eliminated in the subsequent control cycle. This provides advantageous effects that the limited operation signal for a controlled target can be stabilized even in the initial state of saturation of the limited operation signal for the controlled target.

### BRIEF DESCRIPTION OF DRAWINGS

FIG. 1 is a view illustrating an example of a configuration of a regulator according to a first embodiment.
FIG. 2 is a view illustrating an example of a configuration of an over-integration computing section according to the first embodiment.
FIG. 3 is a view illustrating an example of a configuration of a regulation computing section according to the first embodiment.
FIG. 4 is a view illustrating an example of a configuration of a regulation computing section according to a second embodiment.
FIG. 5 is a view illustrating an example of a configuration of a position-type I regulating section according to the second embodiment.
FIG. 6 is a view illustrating an example of a configuration of a position-type I regulating section according to a third embodiment.
FIG. 7 is a view illustrating an example of a configuration of an output limiting section according to the first embodiment.
FIG. 8 is a view illustrating an example of a configuration of an output limiting section according to a fourth embodiment.
FIG. 9 is a view illustrating an example of a configuration of a regulator according to a fifth embodiment.
FIG. 10 is a view illustrating an example of a configuration of an output limiting section according to a sixth embodiment.
FIG. 11 is a view illustrating an example of a configuration of an output limiting section according to a seventh embodiment.
FIG. 12 is a view illustrating an example of a conventional regulator in operation.
FIG. 13 is a view illustrating an example of the regulator according to the first embodiment in operation.
FIG. 14 is a view illustrating an example of a quantizer section in operation.

### EXPLANATIONS OF LETTERS OR NUMERALS

1 Regulator
2 Controlled target
11, 12 Input section
13 Deviation computing section
14 Regulation computing section
15 Output limiting section
16 Over-integration computing section
17 Maximum value selecting section (first maximum value selecting section)
18 SVMV converting section
21 Speed-type I regulating section (speed-type integration regulating section)
22 Speed-type PD regulating section
23, 34 Adder section
24, 43 Integrator
26, 36, 91, 92 Storage section
27, 37, 42, 52, 63 Subtractor section
28, 44 M/A changeover switch
31 Position-type I regulating section (position-type integration regulating section)
32 Position-type PD regulating section 41, 54 Gain section
51 Feedback gain section
53 Gain-equipped Integrator
60 One or more serially connected limiting components
61 Upper and lower limit restricting section
62 Change-rate limiting section
64, 65 Quantizer section
66 Maximum value selecting section (second maximum value selecting section)
71, 72, 81, 82 Operation signal status
93 Absolute minimum value selecting section
SV Target value
SV[n] Current target value
PV Process value
PV[n] Current process value
e[n] Deviation
ΔI[n] Speed-type I regulating signal (speed-type integration regulating signal)
ΔI[n-1] Previous speed-type I regulating signal
MV[n] Operation signal
MV2[n] Limited operation signal
ARW[n] Previous over-integration signal
δ[n] Limit deviation signal
δ[n-1] Previous limit deviation signal
ΔP[n]+AD[n] Speed-type P+D regulating signal
ΔMV[n] Speed-type regulating signal
MVI[n] Position-type I regulating signal (position-type integral regulating signal)
MVP[n]+MVD[n] Position-type P+D regulating signal Manu Manual switching signal
LV Minimum guarantee target value
LV[n] Current minimum guarantee target value
M1[n] Manual operation signal
M2[n] Minimum guarantee operation signal

### BEST MODES FOR CARRYING OUT THE INVENTION

Now, embodiments of a regulator according to the present invention will be described below in more detail with reference to the accompanying drawings. Note that these embodiments are not intended to limit the invention.

### First Embodiment

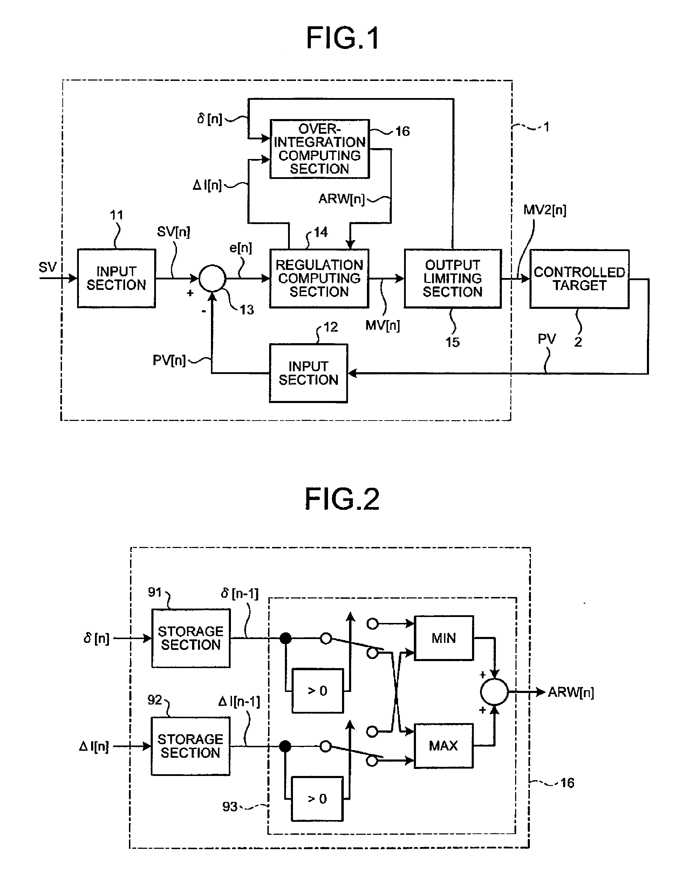

FIG. 1 is a view illustrating an example of a configuration of a regulator according to a first embodiment. A regulator 1 plays a role of regulating a limited operation signal MV2[n] or an output to a controlled target 2 so that a target value SV (also referred to as a set point value) agrees with a process value PV (also referred to as a measured value) of a controlled target 2. Related drawings are FIGS. 1, 2, 3, and 7.

The regulator 1 of this embodiment is composed of: an input section 11 for receiving the target value SV; an input section 12 for receiving the process value PV of the controlled target 2; a deviation computing section 13 for calculating a deviation e[n] between the outputs therefrom; a regulation computing section 14 for computing an operation signal MV[n] on the basis of the deviation e[n] to eliminate the deviation and outputting the resulting signal; an output limiting section 15; and an over-integration computing section 16. The output limiting section 15 restricts the operation signal MV[n] by a predetermined limit value to output the limited operation signal MV2[n] to the controlled target 2 as well as outputs a limit deviation signal δ[n] indicative of a degree of deviation from a predetermined limit. The over-integration computing section 16 calculates a previous over-integration signal ARW[n] corresponding to an over-integration having occurred during a previous control cycle (hereinafter referred to as the "previous over-integration") on the basis of a speed-type I regulating signal ΔI[n] delivered by the regulation computing section 14 and the limit deviation signal δ[n]. The previous over-integration signal ARW[n] is supplied to the regulation computing section 14 to eliminate the previous over-integration by correcting an integral stored in it.

The regulator 1 is illustrated as a single unit in FIG. 1, but may also be part of the software of a device or a system that may include a plurality of devices connected to each other. The regulator 1 may be referred to as not only the "regulator" but also "** controller" or "** control system".

As used herein, notations such as [n] or [n-1] will be generally found after the name of signals. The "n" increments by one each control cycle after the system has been started. This means that X[n] indicates the value of X in the nth control cycle after the system has been started. It is also possible to interpret X[n] simply as a current control cycle value and X[n-1] as a previous control cycle value. As used herein, a storage section is illustrated as means for converting X[n] into X[n-1]. The storage section is "1/Z" in terms of the pulse transfer function.

The input section 11 is supplied with the target value SV via serial communications from an upper-level system (not shown) or in the form of an analog signal. The input section 12 is supplied with a process value via serial communications from sensors (not shown) for detecting the process value PV of the controlled target 2 or in the form of an analog signal. The analog signal needs to be converted into the digital signal by the AD converter. This process may also additionally include, as required, either digital filtering or analog filtering with the operational amplifier circuit. For the digital filtering, oversampling may be carried out at a few multiple sampling cycles of the control cycle, as required. In particular, in the presence of a number of noise components in the signal from a sensor, eliminating noise components in advance with a low pass filter is crucial in providing control with stability.

The deviation computing section 13 performs an operation of e[n] = the current target value SV[n] - the current process value PV[n] to determine the deviation e[n].

The controlled target 2 may be a piece of hardware itself that is actually controlled or an arrangement including a controller for controlling hardware. To directly operate a piece of hardware, at least a DA converter or an actuator (not shown) will be required, while to operate a controller for controlling the hardware, real communication means or an analog signal interface (not shown) will be required. On the other hand, if the controller itself for controlling the hardware is the software that is included in the same device as the regulator, then no special interface means will be required.

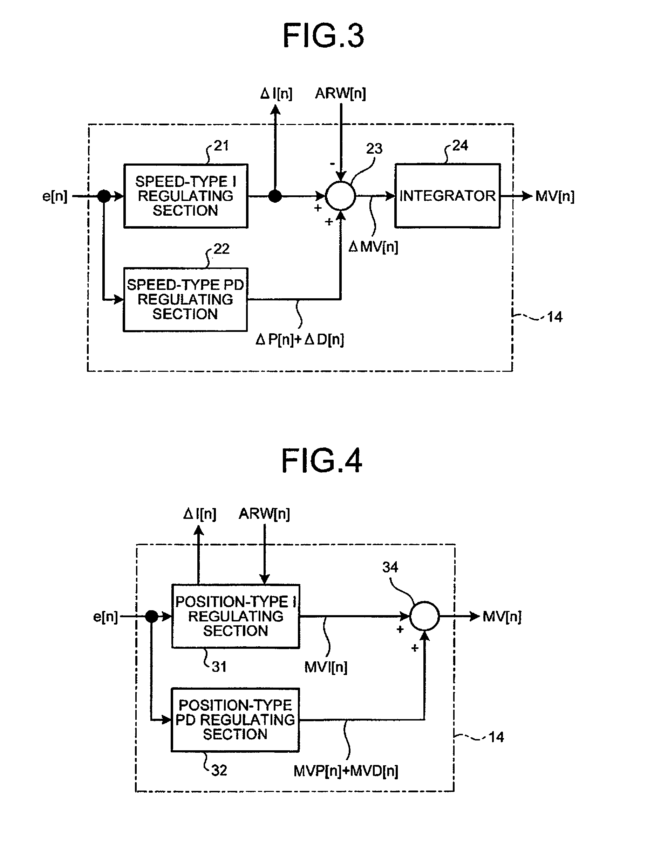

FIG. 3 is a view illustrating an example of a configuration of a regulation computing section according to the first embodiment. As described above, the regulation computing section 14 plays a role of computing the operation signal MV[n] to eliminate deviations on the basis of the deviation e[n] and outputting the resulting signal.

The regulation computing section 14 is composed of a speed-type I regulating section 21, a speed-type PD regulating section 22, an adder section 23, and an integrator 24. The speed-type I regulating section 21 serves as a speed-type integration regulating section for using a speed-type I action (hereinafter referred to as the "I action") based on the deviation e[n] to output the speed-type I regulating signal ΔI[n] serving as a speed-type integration regulating signal. The speed-type PD regulating section 22 uses a speed-type P action (hereinafter referred to as the "P action") and a speed-type D action (hereinafter referred to as the "D action") based on the deviation e[n] to output a speed-type P+D regulating signal ΔP[n]+ΔD[n] (a first speed-type regulating signal). The adder section 23 adds the speed-type P+D regulating signal ΔP[n]+ΔD[n] to the speed-type I regulating signal ΔI[n] and then subtracts the previous over-integration signal ARW[n] therefrom to find a second speed-type regulating signal ΔMV[n]. The integrator 24 converts the output from the adder section 23 into the operation signal MV[n] serving as a position-type signal.

The speed-type I regulating section 21 performs an operation of ΔI[n] = Kp· (τ/TI)·(e[n] + e[n-1])/2 to determine the speed-type I regulating signal ΔI[n]. Note that in the equation above, symbol τ is the control cycle, TI is the integral time, and Kp is the proportional gain.

The speed-type PD regulating section 22 performs an operation of ΔP[n] = Kp·(e[n] - e[n-1]) and ΔD[n] = Kp·(TD/τ)·(e[n] - 2e[n-1] + e[n-2]) and adds the results to determine the speed-type P+D regulating signal ΔP[n]+ΔD[n]. Note that in the equation above, symbol TD is the derivative time. In this description, the speed-type PD regulating section 22 was taken as an example; however, the speed-type P regulating section with no D action may also be employed. The aforementioned ΔD[n] equation is an exact differential equation; however, a typically used inexact differential equation may also be employed. Furthermore, it is also acceptable to employ not only the speed-type PID regulation computation but also any computation other than the speed-type integral operation.

The adder section 23 performs an operation of AMV[N] = ΔI[n] + ΔP[n] + ΔD[n] - ARW[n] to determine a speed-type regulating signal ΔMV[n]. What should be emphasized here is that this processing is directed strictly to correct an integral in order to eliminate a previous over-integration but not to stop or restrict the integration by turning or limiting the speed-type I regulating signal ΔI[n] to "0" as can be seen in a conventional scheme. Accordingly, the effective value of the speed-type I regulating signal is inevitably ΔI[n] but not ΔI[n] - ARW[n]. The over-integration computing section 16 to be described later therefore employs ΔI[n].

The integrator 24 performs an operation of MV[n] = MV[n-1] + ΔMV[N] to convert the speed-type regulating signal ΔMV[N] into the operation signal MV[n] serving as a position-type regulating signal.

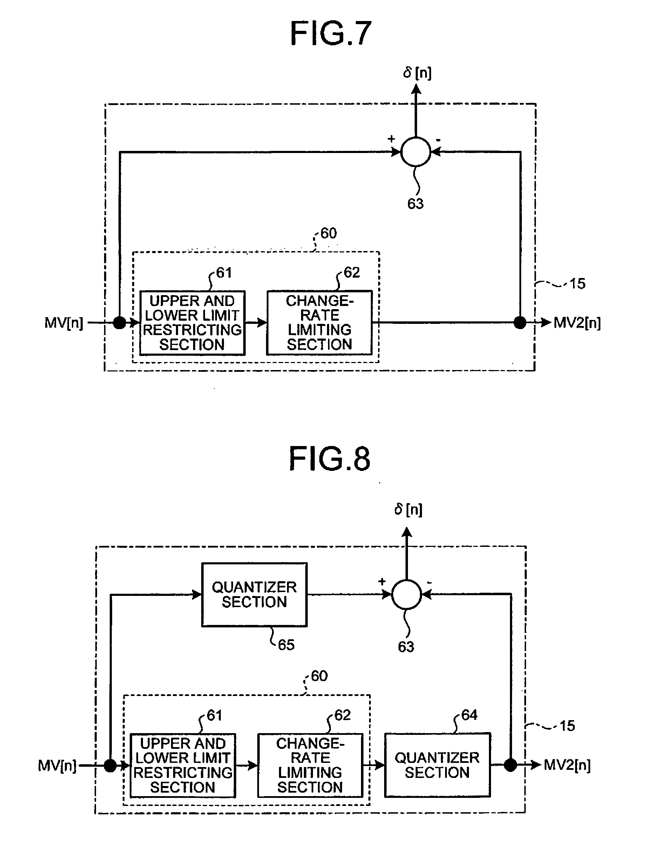

FIG. 7 is a view illustrating an example of such an output limiting section according to the first embodiment. As described above, the output limiting section 15 plays a role of restricting the operation signal MV[n] by a predetermined limit value to output the limited operation signal MV2[n] to the controlled target 2 as well as outputting the limit deviation signal δ[n] indicative of a degree of deviation from a predetermined limit.

The output limiting section 15 is composed of an upper and lower limit restricting section 61, a change-rate limiting section 62, and a subtractor section 63. The upper and lower limit restricting section 61 restricts the magnitude of the operation signal MV[n] within a predetermined range. The change-rate limiting section 62 restricts the rate of change in output within a predetermined range to thereby determine the limited operation signal MV2[n] for output to the controlled target 2. The subtractor section 63 subtracts the limited operation signal MV2[n] from the operation signal MV[n] to thereby determine and output the limit deviation signal δ[n] indicative of a degree of deviation from a predetermined limit.

To generalize the function of the upper and lower limit restricting section 61, suppose that the input signal is X[n] and the output signal is Y[n] for illustration purposes. The upper and lower limit restricting section 61 outputs a predetermined upper limit value if X[n] is above the predetermined upper limit, and a predetermined lower limit value if X[n] is below the predetermined lower limit value. In any other cases, the upper and lower limit restricting section 61 outputs the value of X[n] as Y[n].

To generalize the function of the change-rate limiting section 62, suppose that the input signal is X[n] and the output signal is Y[n] for illustration purposes. The change-rate limiting section 62 outputs Y[n-1] + a predetermined upper limit value if X[n] is over Y[n-1] + the predetermined upper limit value, and Y[n-1] + a predetermined lower limit value if X[n] is below Y[n-1] + the predetermined lower limit value, or otherwise, outputs X[n] as Y[n].

The subtractor section 63 performs an operation of δ[n] = MV2[n] - MV[n] to determine the limit deviation signal δ[n].

In this description, such an example has been illustrated in which the upper and lower limit restricting section 61 and the change-rate limiting section 62 are arranged in that order; however, alternatively, only either one of them can be employed or they may be arranged in the reverse order. Now, the upper and lower limit restricting section 61 and the change-rate limiting section 62 will be referred to as one or more limiting components 60.

FIG. 2 is a view illustrating an example of a configuration of an over-integration computing section according to the first embodiment. As described above, the over-integration computing section 16 plays a role of calculating the previous over-integration signal ARW[n] corresponding to the previous over-integration on the basis of the speed-type I regulating signal ΔI[n] and the limit deviation signal δ[n].

The over-integration computing section 16 includes: storage sections 91 and 92 for storing the speed-type I regulating signal ΔI[n] and the previous value of the limit deviation signal δ[n], respectively; and an absolute minimum value selecting section 93. The section 93 selects "0" if both outputs, i.e., the previous speed-type I regulating signal ΔI[n-1] and the previous limit deviation signal δ[n-1], have different signs, and selects the signal having the smaller absolute value if the outputs have the same sign.

Note that the configuration of the absolute minimum value selecting section 93 is shown in FIG. 2 only as an example for implementing the aforementioned processing. More specifically, when both the previous limit deviation signal δ[n-1] and the previous speed-type I regulating signal ΔI[n-1] have a positive value, the signals are supplied to a minimum value selecting section (MIN) through the upper contact of a switch section to select the signal of the smaller value (i.e., the smaller absolute value). On the other hand, if both the signals have a negative value, the signals are supplied to a maximum value selecting section (MAX) through the lower contact of the switch section to select the signal of the larger value (i.e., the smaller absolute value). Furthermore, when δ[n-1] has a positive value and ΔI[n-1] has a negative value, the upper switch section allows the value of δ[n-1] to be supplied to the minimum value selecting section (MIN) through the upper contact, while the lower switch section having been turned downwardly allows "0" to be output to the minimum value selecting section (MIN). Therefore, the minimum value selecting section (MIN) outputs "0." Likewise, the maximum value selecting section (MAX) also outputs "0." The output of the minimum value selecting section (MIN) and the output of the maximum value selecting section (MAX) can be added to yield "0."

Now, the over-integration computing section 16 will be detailed for each of various cases. First, when no previous deviation has occurred (if δ[n-1] = 0), the value of the previous over-integration signal ARW[n] has to be made "0" because no over-integration has occurred. This condition is satisfied because selecting the minimum absolute value allows the output to be "0" if either one of the inputs is "0."

On the other hand, if a previous deviation has occurred, the deviation is caused clearly only by the I regulation computation when the previous deviation signal δ[n-1] and the previous speed-type I regulating signal ΔI[n-1] have the same sign, and their respective absolute values have a relation of |δ[n-1]| < |ΔI[n-1]|. In this case, the value of the previous over-integration signal ARW[n] has to be the value of the previous deviation signal δ[n-1]. This is also satisfied by selecting the minimum absolute value.

Furthermore, if a previous deviation has occurred, if the previous deviation signal δ[n-1] and the previous speed-type I regulating signal ΔI[n-1] may have the same sign, and if their respective absolute values may have a relation of |δ[n-1]| > |ΔI[n-1]|, the deviation is caused not only by the I regulation computation but also by the P regulation computation or the D regulation computation. In this case, the value of the previous over-integration signal ARW[n] has to be the value of the previous speed-type I regulation computation output ΔI[n-1]. This is also satisfied by selecting the minimum absolute value.

Furthermore, if a previous deviation has occurred, and if the previous deviation signal δ[n-1] and the previous speed-type I regulating signal ΔI[n-1] have different signs, the I regulation computation has nothing to do with the deviation. In this case, since no over-integration has occurred, the value of the previous over-integration signal ARW[n] has to be "0". This is also satisfied by selecting the minimum absolute value.

Note that as described above, the previous over-integration signal ARW[n] is supplied to the regulation computing section 14, and the previous over-integration is eliminated by correcting an integral stored in itself.

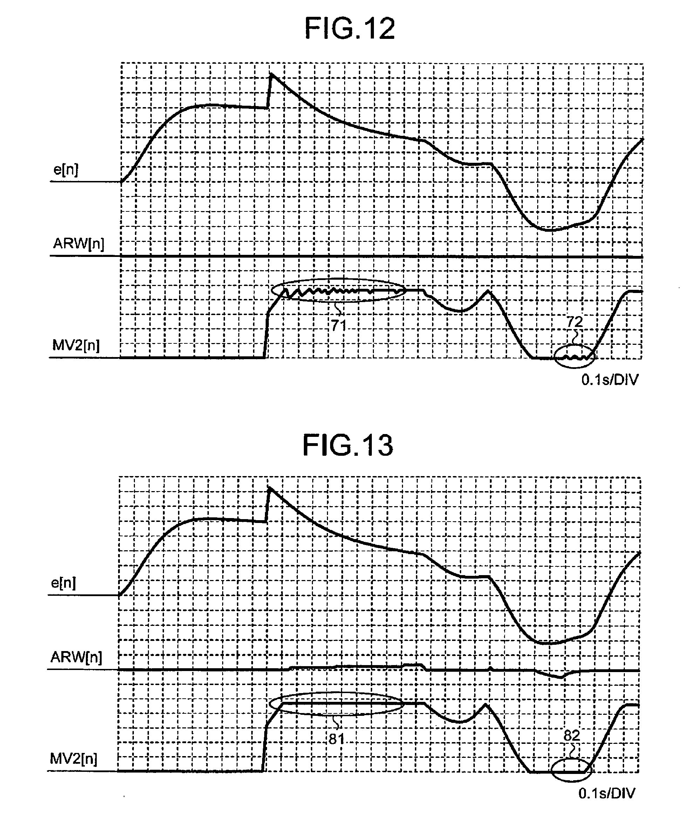

FIG. 12 is a view illustrating an example of a conventional regulator in operation. The conventional regulator may determine that there is a deviation from a limit value of the output limiting section 15, and the value of the speed-type I regulating signal ΔI[n] tends to expand the limit deviation signal δ[n]. In this case, the regulator performs the anti-reset-windup processing to stop the integral operation by turning the value of the speed-type I regulating signal ΔI[n] to "0". However, a hunting phenomenon will occur in which repetitions between saturation and desaturation are seen every control cycle, and the limited operation signal MV2[n] to the controlled target 2 minutely varies as shown with limited operation signal statuses 71 and 72. This happens upon saturation of the limited operation signal when there is a relatively small number of limit deviation signals and the deviation e[n] is being reduced toward "0."

FIG. 13 is a view illustrating an example of a regulator in operation according to the first embodiment. The regulator according to the first embodiment can improve the hunting phenomenon of the limited operation signal MV2[n] as shown with operation signal statuses 81 and 82. This is because the regulator neither turns the speed-type I regulating signal ΔI[n] to "0" nor restricts it but eliminates the previous over-integration.

As described above, the regulator 1 according to the first embodiment can prevent the hunting phenomenon and overshoots and undershoots when the operation signal MV[n] has exceeded predetermined upper and lower limit values or the limit value of change rates. This is because the regulator neither turns the speed-type I regulating signal ΔI[n] to "0" nor limits it, but the regulation computing section 14 eliminates the over-integration (the previous over-integration) that has occurred during the previous control cycle. As a result, when compared with the conventional regulator, the regulator 1 does not cause, for example, a controller or the like to be worn or damaged by giving sudden changes in the process value PV of the controlled target 2. It is also possible to prevent unwanted behavior or increase in power consumption in the controller caused by the hunting phenomenon. Furthermore, irrespective of the amount of the speed-type I regulating signal ΔI[n] in a control cycle where saturation has occurred, the previous over-integration will be eliminated in the subsequent control cycle, thereby allowing for recovering from saturation more quickly. That is, the regulator 1 according to the first embodiment can attain a high controllability of the controlled target 2 and provide stable control thereto. Thus, the controlled target 2 can be provided with a longer service life, improved durability, reduced energy consumption, enhanced safety, and reduced maintenance costs.

### Second Embodiment

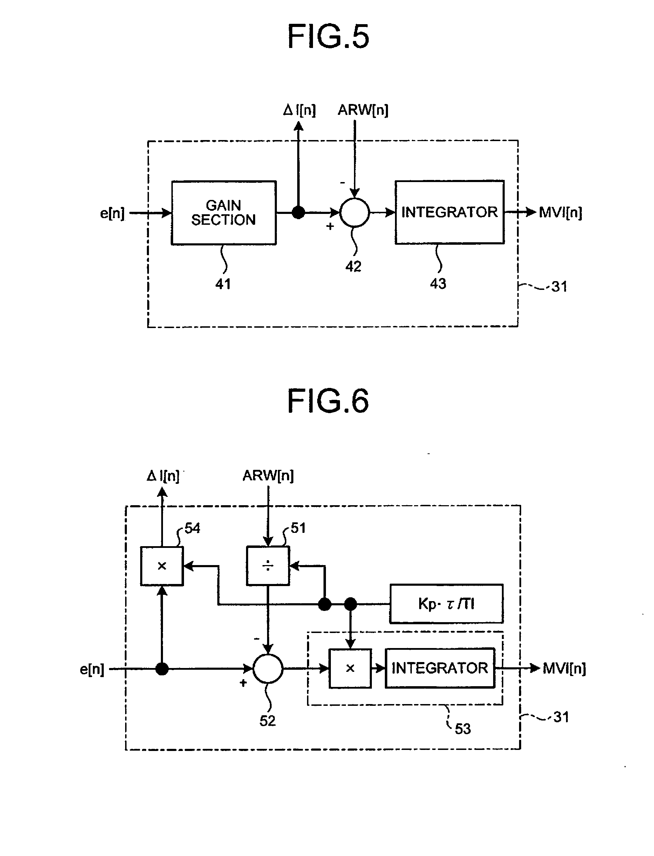

Although the regulator 1 according to the first embodiment is formed of the regulation computing section 14 or a regulating section such as the speed-type I regulating section 21, a regulator 1 according to a second embodiment is composed of a regulating section such as a position-type I regulating section 31, which serves as a position-type integration regulating section. A description will now be made only to the portions that are different from those of the first embodiment. Related drawings are FIGS. 1, 2, 4, 5, and 7 (the difference lies only in that FIG. 3 is replaced with FIGS. 4 and 5).

FIG. 4 is a view illustrating an example of a configuration of a regulation computing section according to the second embodiment. As described above, the regulation computing section 14 plays a role of computing and outputting the operation signal MV[n] based on the deviation e[n] in order to eliminate deviations.

The regulation computing section 14 is composed of the position-type I regulating section 31, a position-type PD regulating section 32, and an adder section 34. Based on a deviation e[n], the position-type I regulating section 31 outputs the speed-type I regulating signal ΔI[n] and a position-type I regulating signal MVI[n] serving as a position-type integral regulating signal and corrects an integral stored in itself with the previous over-integration signal ARW[n]. The position-type PD regulating section 32 outputs a position-type P+D regulating signal MVP[n]+MVD[n] (a first position-type regulating signal) on the basis of the deviation e[n]. The adder section 34 adds the position-type P+D regulating signal MVP[n]+MVD[n] to the position-type I regulating signal MVI[n] to determine the operation signal MV[n] serving as a second position-type regulating signal.

The position-type PD regulating section 32 performs an operation of MVP[n]=Kp·e[n] and MVD[n] = Kp·(TD/τ)·(e[n] - e[n-1]) and sums them up to determine the position-type P+D regulating signal MVP[n]+MVD[n]. A description has been made to the position-type PD regulating section 32 as an example; however, a position-type P regulating section with no D action may also be employed. The aforementioned MVD[n] equation is an exact differential equation; however, a typically used inexact differential equation may also be employed. Furthermore, it is also acceptable to employ not only the position-type PID regulation computation but also any computation that would eliminate integral operations.

The adder section 34 performs an operation of MV[n] = MVI[n] + MVP[n] + MVD[n] to determine the operation signal MV[n].

FIG. 5 is a view illustrating an example of a configuration of a position-type I regulating section according to the second embodiment. As described above, the position-type I regulating section 31 plays a role of outputting the speed-type I regulating signal ΔI[n] and the position-type I regulating signal MVI[n] on the basis of the deviation e[n] as well as correcting an integral stored in itself with the previous over-integration signal ARW[n].

The position-type I regulating section 31 is composed of a gain section 41, a subtractor section 42, and an integrator 43. The gain section 41 outputs the speed-type I regulating signal ΔI[n] by multiplying a deviation e[n] resulting from a subtraction of a process value from a target value by a predetermined gain. The subtractor section 42 performs an operation of subtracting the previous over-integration signal ARW[n] from the speed-type I regulating signal ΔI[n]. The integrator 43 determines the position-type I regulating signal MVI[n] by integrating the output of the subtractor section 42.

The gain section 41 performs an operation of ΔI[n] = Kp·(τ/TI)·(e[n] + e[n-1])/2 to determine the speed-type I regulating signal ΔI[n].

The subtractor section 42 performs an operation of ΔI[n]-ARW[n].

The integrator 43 performs an operation of MVI[n] = MVI[n-1] + the output of the subtractor section 42 to determine the position-type I regulating signal MVI[n].

The effects provided by this embodiment are the same as those given by the first embodiment, and thus will be omitted.

### Third Embodiment

A description will now be made to a third embodiment in which the position-type I regulating section 31 of the regulator 1 according to the second embodiment is configured in a slightly different manner. Only the portions different from those of the second embodiment will be described. Related drawings are FIGS. 1, 2, 4, 6, and 7 (the difference lies only in that FIG. 5 is replaced with FIG. 6). This configuration is intended to be capable of eliminating the previous over-integration only by making some modification before and after a typical gain-equipped integrator. If an integrator with a separated gain section is to be employed, then the arrangement of the second embodiment will be recommended.

FIG. 6 is a view illustrating an example of a configuration of a position-type I regulating section according to the third embodiment. As described above, the position-type I regulating section 31 plays a role of outputting the speed-type I regulating signal ΔI[n] and the position-type I regulating signal MVI[n] on the basis of the deviation e[n] as well as correcting an integral stored in itself with the previous over-integration signal ARW[n].

The position-type I regulating section 31 is made up of a gain section 54, a feedback gain section 51, a subtractor section 52, and a gain-equipped integrator 53. The gain section 54 outputs the speed-type I regulating signal ΔI[n] by multiplying a deviation e[n] resulting from a subtraction of a process value from a target value by a predetermined integral gain. The feedback gain section 51 multiplies the previous over-integration signal ARW[n] by the reciprocal of the predetermined integral gain. The subtractor section 52 subtracts the output of the feedback gain section 51 from the deviation e[n]. The gain-equipped integrator 53 multiplies the output of the subtractor section 52 by a predetermined integral gain as well as integrates the resulting output to deliver the position-type I regulating signal MVI[n].

The gain section 54 performs an operation of ΔI[n] = Kp·(τ/TI)·(e[n] + e[n-1])/2 to determine the speed-type I regulating signal ΔI[n].

The feedback gain section 51 performs an operation of ARW[n]·(Ti/τ)/Kp. The subtractor section 52 performs an operation of (e[n] + e[n-1])/2 - the output of the feedback gain section 51.

The gain-equipped integrator 53 performs an operation of MVI[n] = MVI[n-1] + the output of the subtractor section 52·Kp·(τ/TI) to determine the position-type I regulating signal MVI[n].

The effects provided by this embodiment are the same as those given by the first embodiment, and thus will be omitted.

### Fourth Embodiment

A regulator according to a fourth embodiment is configured such that the limited operation signal MV2[n] is quantized to thereby form the output to the controlled target 2 in a step-wise shape and reduce the frequency of operation of the controlled target 2. This is intended to further elongate the service life and reduce the power consumption of the controlled target 2. Only the portions different from those of the first embodiment will be described. Related drawings are FIGS. 1, 2, 3, 8, and 14 (the difference lies only in that FIG. 7 is replaced with FIG. 8).

FIG. 8 is a view illustrating an example of a configuration of an output limiting section according to the fourth embodiment. As described above, the output limiting section 15 plays a role of outputting the limited operation signal MV2[n] to the controlled target 2 by restricting the operation signal MV[n] with a predetermined limit value as well as outputting the limit deviation signal δ[n] indicative of a degree of deviation from the predetermined limit.

The output limiting section 15 is composed of the upper and lower limit restricting section 61, the change-rate limiting section 62, a quantizer section 64, a quantizer section 65, and the subtractor section 63. The upper and lower limit restricting section 61 restricts the magnitude of the operation signal MV[n] within a predetermined range, and the change-rate limiting section 62 restricts the rate of change in the output within a predetermined range. The quantizer section 64 allows a possible value of the output to be restricted within a range of integral multiples of a predetermined value and thus quantized, thereby determining the limited operation signal MV2[n] and outputting the signal to the controlled target 2. The quantizer section 65, which has the same limit value as the quantizer section 64 does, allows a possible value of the operation signal MV[n] to be restricted within a range of integral multiples of a predetermined value and thus quantized. The subtractor section 63 determines and outputs the limit deviation signal δ[n] indicative of a degree of deviation from a predetermined limit by subtracting the limited operation signal MV2[n] from the output of the quantizer section 65. Now, a description will be made to the operation of the regulator 1 according to the fourth embodiment.

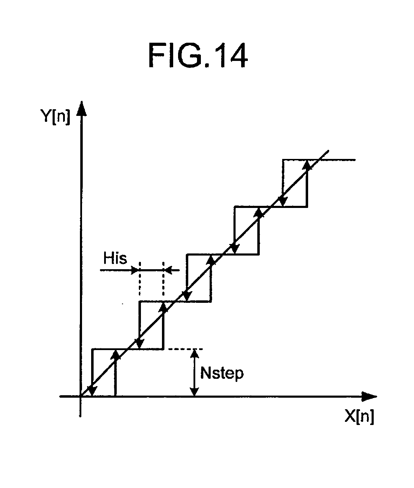

FIG. 14 is a view illustrating an example of a quantizer section in operation. Here, to generalize the function of the quantizer sections 64 and 65, the input and output signals are assumed to be X[n] and Y[n] respectively for illustration purposes. The quantizer sections 64 and 65 each are a filter which has input/output characteristics, for example, as shown in FIG. 14. Output Y[n] is quantized to integral multiples of Nstep. It is also provided with a hysteresis (His) characteristic to prevent chattering with respect to input X[n]. This hysteresis characteristic may not be inevitably necessary, but is recommended to have in terms of reductions in the number of times of operations, which is the aim of the quantization.

The other portions of FIG. 8 have already been explained in relation to the first embodiment and will be omitted. Furthermore, as having been explained in the first embodiment, it is also possible to employ either one of the upper and lower limit restricting section 61 and the change-rate limiting section 62, and the sections can also be arranged in the reverse order.

Provision of the quantizer section 64 allows the limited operation signal MV2[n] to the controlled target 2 to vary only in the unit of Nstep. Here, considering the quantizer section 64 to be the same type of filter as the upper and lower limit restricting section 61 and the change-rate limiting section 62, the quantizer section 65 can be thought to be eliminated. However, if the quantizer section 65 is eliminated, the operation signal MV[n] and the limited operation signal MV2[n] are always different from each other, which is thus equivalent to the situation of there always occurring a deviation. In this case, even when an attempt is made to minutely perform operations inside, a previous over-integration is being eliminated all the time through the quantizer section 64 and the subtractor section 63, resulting in operations being performed only in the resolution in the unit of Nstep. In this context, the quantizer section 65 is provided, so that the signal δ[n] takes on other than "0" only when a deviation has occurred in the upper and lower limit restricting section 61 and the change-rate limiting section 62.

That is, when there occurs no deviation in the upper and lower limit restricting section 61 and the change-rate limiting section 62, the operation signal MV[n] and the output of the change-rate limiting section 62 have the same value. Accordingly, the quantizer section 64 and the quantizer section 65 are supplied with the same value. Furthermore, since the quantizer section 64 and the quantizer section 65 are configured in the same manner, the output of the quantizer section 64 or the limited operation signal MV2[n] and the output of the quantizer section 65 are equal to each other.

When there has occurred a deviation in the upper and lower limit restricting section 61 and the change-rate limiting section 62, the subtractor section 63 subtracts the limited operation signal MV2[n] from the output of the quantizer section 65, and then produces the resulting value as the limit deviation signal δ[n].

As described above, the regulator 1 according to the fourth embodiment includes the quantizer section 64 for determining the limited operation signal MV2[n] and outputting the resulting signal to the controlled target 2. The regulator 1 also includes the quantizer section 65, which has the same limit value as the quantizer section 64, allows a possible value of the operation signal MV[n] to be restricted within a range of integral multiples of a predetermined value and thus quantized. The output to the controlled target 2 is varied in a stepwise manner, thereby making it possible to reduce the frequency of operations of the controlled target 2. As a result, the controlled target 2 can be provided with a longer service life, improved durability, reduced energy consumption, enhanced safety, and reduced maintenance costs.

### Fifth Embodiment

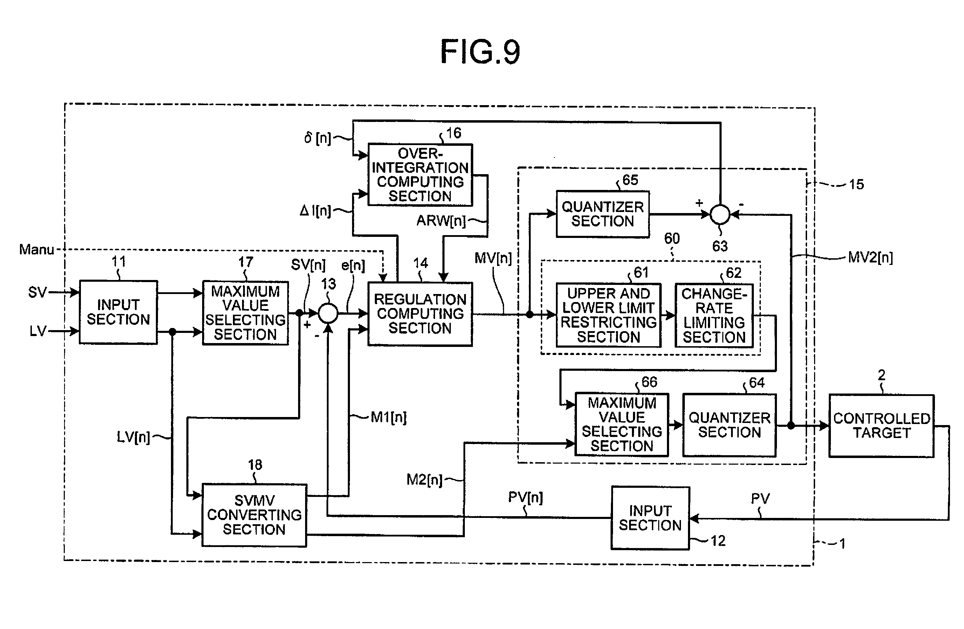

When compared with the regulator 1 according to the fourth embodiment, a regulator 1 according to a fifth embodiment is provided with an additional higher-level priority function. Related drawings are FIGS. 9, 2, and 3.

FIG. 9 is a view illustrating an example of a configuration of a regulator according to the fifth embodiment. The regulator 1 plays a role of regulating an output to the controlled target 2 or the limited operation signal MV2[n] so that the process value PV of the controlled target 2 agrees with the higher of the target value SV and the minimum guarantee target value LV. However, the output is never equal to or lower than the minimum guarantee operation signal M2[n] that is calculated from the minimum guarantee target value LV, and is always equal to or greater than the minimum guarantee operation signal M2[n]. For example, SV is given through manual operation, and LV is a protection command given by a safety device. In the presence of the protection command, the regulator operates to guarantee at least the process value corresponding to LV. However, even when M2[n] simply calculated from LV causes an excessive output, no adjustments has to be made to reduce the limited operation signal.

When compared with the regulator 1 of the first embodiment, the regulator 1 according to the fifth embodiment additionally includes a maximum value selecting section 17 serving as a first maximum value selecting section, and an SVMV converting section 18. The maximum value selecting section 17 makes a higher-priority selection between a target value SV given by an upper-level system (not shown) and a minimum guarantee target value LV and outputs a selected target value to the regulation computing section 14. The SVMV converting section 18 converts the minimum guarantee target value LV into the minimum guarantee operation signal M2[n]. The output limiting section 15 is additionally provided with a maximum value selecting section 66 serving as a second maximum value selecting section to make a higher-priority selection between the operation signal MV[n] from the regulation computing section 14 and the minimum guarantee operation signal M2[n] as an output to the controlled target 2.

The SVMV converting section 18 converts the target value determined from the specification of the controlled target 2 into an operation signal. Typically, the straight line characteristic of equation Y = A·X + B is employed. For example, an operation of M2[n] = LV[N]·A1 + B1 is performed to determine the minimum guarantee operation signal M2[n]. Here, let A1 and B1 be the constants to be determined from the specification of the controlled target 2. Although this example employs a linear equation, any function may also be used depending on the controlled target 2.

The maximum value selecting section 17 selects the larger value of SV[n] and LV[N].

The maximum value selecting section 66 selects the larger value of M2[n] and the output of the change-rate limiting section 62 and outputs the resulting value to the quantizer section 64.

It is acceptable to employ only one of or none of the upper and lower limit restricting section 61 and the change-rate limiting section 62 included in the output limiting section 15. Furthermore, their order can be reversed. It is also acceptable to employ both or none of the quantizer sections 64 and 65.

In the case of absence of the maximum value selecting section 17, the maximum value selecting section 66 allows the minimum guarantee operation signal M2[n] to be assigned a higher priority for output. However, since the presence of a large difference between the target value SV and the minimum guarantee target value LV would cause a deviation e[n], the operation signal MV[n] from the regulation computing section 14 is automatically fixed to the lowest value. Accordingly, the operation signal MV[n] from the regulation computing section 14 would never act effectively. To allow it to act effectively, the maximum value selecting section 17 needs to be provided, whereby the target value SV[n] supplied to the regulation computing section 14 is to be assigned a higher-level priority.

As described above, the regulator according to the fifth embodiment includes the maximum value selecting section 17, the SVMV converting section 18, and the maximum value selecting section 66. In the presence of a shortage during the minimum guarantee operation with this arrangement, the operation signal MV[n] of the regulation computing section 14 can allow a regulating operation to effectively act. As a result, it is possible to safely perform a higher-level priority operation that would be required for cooperation with a safety device.

### Sixth Embodiment

When compared to the fifth embodiment, a sixth embodiment is further equipped with a manual switching function. In general, it is usually required to be capable of providing automatic regulation but also manual operation. Here, a description will be made to a solution for such a case.

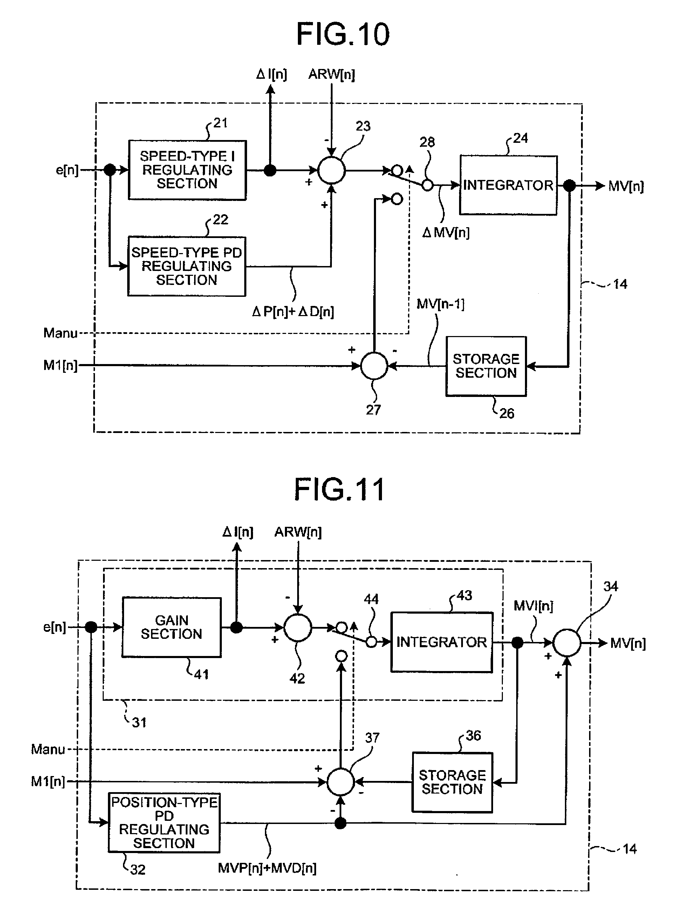

FIG. 9 is a view illustrating an example of a configuration of a regulator 1 according to the sixth embodiment. Only the portions different from those of the fifth embodiment will be described. Related drawings are FIGS. 9, 2, and 10 (the difference lies only in that FIG. 3 is replaced with FIG. 10).

When compared with the regulator 1 of the fifth embodiment, the regulator 1 according to the sixth embodiment is additionally provided with an SVMV converting section 18 for converting the current target value SV[n] into a manual operation signal M1[n]. The regulation computing section 14 is additionally provided with a subtractor section 27 and an M/A changeover switch 28. The subtractor section 27 uses a manual switching signal Manu to perform an operation of the manual operation signal Ml[n] - the operation signal MV[n-1] of the previous control cycle during manual operation. The M/A changeover switch 28 switches the second speed-type regulating signal ΔMV[n] to a predetermined signal computed in the subtractor section 27.

The SVMV converting section 18 converts the target value determined from the specification of the controlled target 2 into an operation signal. In general, the straight line characteristic of equation Y = A·X + B is used. For example, an operation of M1[n] = SV[n]·A1 + B1 is performed to determine the manual operation signal M1[n]. Here, A1 and B1 are assumed to be the constants that are determined from the specification of the controlled target 2. Although a linear equation is employed here, any function may also be used depending on the controlled target 2.

FIG. 10 is a view illustrating an example of a configuration of a regulation computing section according to the sixth embodiment. The sixth embodiment is different from the fifth embodiment in that when the manual switching signal Manu is supplied and the manual switching signal Manu is in an ON state (during manual operation), the second speed-type regulating signal ΔMV[n] is switched over to M1[n] - MV[n-1]. This arrangement ensures that the operation signal MV[n] coincides with M1[n] during manual operation. To use no integrator 24 itself, it is also acceptable to additionally provide a predetermined switch (not shown) for switching the output of the integrator 24 (the operation signal MV[n]) to M1[n]. Note that the regulation computing section 14 shown in FIG. 10 allows the M/A changeover switch 28 to switch between the output of the computation of M1[n] - MV[n-1] performed in the subtractor section 27 and the signal delivered from the adder section 23.

As described above, the regulator according to the sixth embodiment includes the SVMV converting section 18, and the function for switching the input of the integrator to the manual operation signal - the operation signal of the previous control cycle during manual operation, thereby enabling balanceless and bumpless switching. As used herein, the term "balanceless" means that there is no need to wait for switching until the process value PV and the target value SV become balanced. On the other hand, the term "bumpless" means that there exists no such operation that causes the operation signal MV[n] to suddenly change upon being switched, resulting in the process value PV being varied. As a result, when compared to the conventional regulator, it is possible to provide improved controllability over the controlled target 2.

### Seventh Embodiment

When compared to the sixth embodiment, a seventh embodiment is further adapted to a position-type regulating section.

FIG. 9 is a view illustrating an example of a configuration of a regulator 1 according to the seventh embodiment. Only the portions different from those of the sixth embodiment will be described. Related drawings are FIGS. 9, 2, and 11 (the difference lies only in that FIG. 10 is replaced with FIG. 11).

FIG. 11 is a view illustrating an example of a configuration of a regulation computing section according to the seventh embodiment. The seventh embodiment is different from the second embodiment in that when the manual switching signal Manu is supplied and the manual switching signal Manu is in an ON state, the input of the integrator 43 is switched to M1[n] - MV[n-1] - (MVP[n] + MVD[n]). This arrangement ensures that the operation signal MV[n] coincides with M1[n] when the manual switching signal Manu is in an ON state. To use no integrator 43 itself, it is also acceptable to additionally provide a predetermined switch (not shown) for switching the output of the integrator 43 (the operation signal MV[n]) to M1[n]. Note that the regulation computing section 14 shown in FIG. 11 allows an M/A changeover switch 44 to switch between the signal M1[n] - MV[n-1] - (MVP[n] + MVD[n]) provided by a subtractor section 37 and the signal output from the subtractor section 42.

Note that while the regulator according to each embodiment has been described with reference to an exemplary regulator for controlling deceleration of rail cars, the present invention is also applicable to other regulators such as one which includes the I regulation computing section and the output limiting section or to a control system. Furthermore, a variety of modifications may be made to the present invention without deviating the scope and spirit of the invention.

### INDUSTRIAL APPLICABILITY

As described above, the regulator according to the present invention is applicable not only to a regulator for controlling deceleration of rail cars but also to various types of regulators, controllers, and control systems which include the I regulation computing section and the output limiting section.

## Claims

1. A regulator (1), comprising:
a regulation computing section (14) for computing and outputting an operation signal to allow a process value from a controlled target (2) to agree with a target value; and
an output limiting section (15) for restricting the operation signal from the regulation computing section (14) for output to the controlled target (2),
wherein the regulation computing section (14) comprises at least a speed-type integration regulating section or a position-type integration regulating section, and
the output limiting section (15) comprises a function for outputting a limit deviation signal indicative of a degree of deviation from a predetermined limit, wherein an upper limit and a lower limit restrict the magnitude of the operation signal,
**characterised in that**:
the regulator (1) comprises an over-integration computing section (16) for determining a degree of deviation of an operation signal caused by an integral operation, among operation signals contained in the limit deviation signal in a previous control cycle on the basis of a speed-type integration regulating signal delivered from the regulation computing section (14) and the limit deviation signal delivered from the output limiting section (15), and for outputting a resulting signal as a previous over-integration signal; and
the regulation computing section (14) comprises a function adapted to eliminate the previous over-integration by subtracting the previous over-integration signal (ARW[n]) from an input signal to an integrator (24) of the regulation computing section (14).

2. The regulator (1) according to claim 1, wherein the over-integration computing section (16) comprises:
a storage section (91,92) for storing a previous value of the speed-type integration regulating signal and a previous value of the limit deviation signal; and
an absolute minimum value selecting section (93) for comparing a sign and an absolute value of an output signal from the storage section (91,92) to output a predetermined signal.

3. The regulator (1) according to claim 1, wherein from the limit deviation signal in a previous control cycle and the speed-type integration regulating signal in a previous control cycle, the over-integration computing section (16) selects either "0" if both the signals have different signs or the smaller absolute value of both the signals if the signals have the same sign to calculate a previous over-integration signal.

4. The regulator (1) according to claim 1, wherein the regulation computing section (14) comprises:
a speed-type integration regulating section (21) for outputting a speed-type integration regulating signal on the basis of a deviation;
a speed-type regulating section (22), other than the speed-type integration regulating section, for outputting a first speed-type regulating signal on the basis of a deviation;
an adder section (23) for determining a second speed-type regulating signal through an operation of "the speed-type integration regulating signal + the first speed-type regulating signal - the previous over-integration signal;" and
an integrator (24) for converting the second speed-type regulating signal into an operation signal serving as a position-type signal.

5. The regulator(1) according to claim 1, wherein the regulation computing section comprises:
a position-type integration regulating section (32) for outputting a speed-type integration regulating signal and a position-type integral regulating signal on the basis of a deviation and for allowing the previous over-integration signal to correct an integral stored in itself;
a position-type regulating section (31) other than the position-type integration regulating section (32); and
an adder section (34) for adding a first position-type regulating signal delivered from a position-type regulating section (31) other than the position-type integration regulating section (32) to the position-type integral regulating signal to calculate a second position-type regulating signal and outputting the second position-type regulating signal as an operation signal.

6. The regulator according to claim 5, wherein the position-type integration regulating section comprises a gain section for outputting a speed-type integration regulating signal by multiplying a deviation resulting from a subtraction of a process value from a target value by a predetermined gain, and integrates a signal resulting from a subtraction of the previous over-integration signal from the speed-type integration regulating signal to thereby determine a position-type integral regulating signal.

7. The regulator (1) according to claim 5, wherein the position-type integration regulating section (31) comprises:
a gain section (41) for outputting a speed-type integration regulating signal by multiplying a deviation resulting from a subtraction of a process value from a target value by a predetermined integral gain;
a subtractor section (42) for subtracting, from the deviation, a signal obtained through a multiplication of the previous over-integration signal by a reciprocal of the predetermined integral gain; and
a gain-equipped integrator (43) for acquiring an output from the subtractor section (42), multiplying the output by the predetermined integral gain, and integrating the resulting output to output a position-type integral regulating signal.

8. The regulator(1) according to claim 1, wherein the output limiting section comprises:
one or more serially connected limiting components (61,62) for receiving the operation signal and outputting a limited operation signal to the controlled target (2); and
a subtractor section (63) for determining a limit deviation signal by subtracting the limited operation signal from the operation signal for output to the over-integration computing section (16).

9. The regulator (1) according to claim 1, wherein the output limiting section comprises:
one or more serially connected limiting components (61,62) for restrictively outputting the operation signal;
a first quantizer section (64) for allowing a possible value of an output signal from the one or more serially connected limiting components (61,62) to be restricted within a range of integral multiples of a predetermined value and quantized, and outputting an quantized operation signal to the controlled target;
a second quantizer section (65) for receiving the operation signal, quantizing the signal under a same condition as a condition in the first quantizer section, and outputting a quantized operation signal; and
a subtractor section (63) for determining a limit deviation signal by subtracting an output of the first quantizer section (64) from an output of the second quantizer section (65) for output to the over-integration computing section (16).

10. The regulator (1) according to claim 8 or 9, wherein the regulator (1) comprises:
a first maximum value selecting section (17) for performing higher-priority selection processing on a target value given by an upper-level system and a minimum guarantee target value and for outputting a selected target value to a regulation computing section (14);
an SVMV converting section (18) for converting the minimum guarantee target value into a minimum guarantee operation signal; and
an output limiting section (15) including a second maximum value selecting section (66), the second maximum value selecting section (66) performing at least higher-priority selection processing on an input signal of the one or more serially connected limiting components (61,62) and the minimum guarantee operation signal.

11. The regulator (1) according to any one of claims 8 to 10, wherein the one or more serially connected limiting components comprise an upper and lower limit restricting section (61) for restricting at least a magnitude of an input signal within a predetermined range for output.

12. The regulator(1) according to any one of claims 8 to 10 wherein the one or more serially connected limiting components (61,62) comprise a change-rate limiting section (62) for restricting at least a rate of change in an input signal within a predetermined range for output.

13. The regulator (1) according to claim 4 further comprising an SVMV converting section (18) for converting a target value into a manual operation signal, and wherein the regulation computing section (14) comprises a subtractor section (23) for using a manual switching signal to perform at least an operation of "a manual operation signal - an operation signal in a previous computation cycle" during manual operation, and converts the second speed-type regulating signal into a predetermined signal computed in the subtractor section.

14. The regulator(1) according to claim 6 further comprising an SVMV converting section (18) for converting a target value to a manual operation signal, and wherein the regulation computing section (14) comprises a subtractor section (23) for using a manual switching signal to perform at least an operation of "a manual operation signal - an operation signal in a previous control cycle - the first position-type regulating signal" during manual operation, and converts the second position-type regulating signal into a predetermined signal computed in the subtractor section (23).

## Patentansprüche

1. Regler (1), umfassend:
einen Regelungsberechnungsabschnitt (14) zum Berechnen und Ausgeben eines Betriebssignals, um einen Prozesswert von einem gesteuerten Ziel (2) mit einem Zielwert übereinstimmen zu lassen; und
einen Ausgabebegrenzungsabschnitt (15) zum Begrenzen des Betriebssignals aus dem Regelungsberechnungsabschnitt (14) zur Ausgabe an das gesteuerte Ziel (2),
wobei der Regelungsberechnungsabschnitt (14) zumindest einen Geschwindigkeitsintegrationsregelungsabschnitt oder Stellungsintegrationsregelungsabschnitt umfasst, und
der Ausgabebegrenzungsabschnitt (15) eine Funktion zur Ausgabe eines Grenzabweichungssignals umfasst, das einen Grad einer Abweichung von einer vorbestimmten Grenze anzeigt, wobei eine obere Grenze und eine untere Grenze die Amplitude des Betriebssignals beschränken,
**dadurch gekennzeichnet, dass**:
der Regler (1) einen Überintegrationsberechnungsabschnitt (16) umfasst, um einen Grad einer Abweichung, verursacht durch einer Integraloperation eines Betriebssignals, zwischen Betriebssignalen, die in dem Grenzabweichungssignal in einem früheren Steuerzyklus enthalten sind, auf Grundlage eines von dem Regelungsberechnungsabschnitt (14) gelieferten Geschwindigkeitsintegrationsregelungssignals und des von dem Ausgabebegrenzungsabschnitt (15) gelieferten Grenzabweichungssignals zu bestimmen und um ein sich ergebendes Signal als früheres Überintegrationssignal auszugeben; und
der Regelungsberechnungsabschnitt (14) eine Funktion umfasst, die dazu angepasst ist, die frühere Überintegration durch eine Subtraktion des früheren Überintegrationssignals (ARW[n]) von einem Eingangssignal an einen Integrator (24) des Regelungsberechnungsabschnitts (14) zu eliminieren.

2. Regler (1) nach Anspruch 1, wobei der Überintegrationsberechnungsabschnitt (16) umfasst:
einen Speicherabschnitt (91, 92) zum Speichern eines früheren Werts des Geschwindigkeitsintegrationsregelungssignals und eines früheren Werts des Grenzabweichungssignals; und
einen Absolutmindestwertauswahlabschnitt (93) zum Vergleichen eines Vorzeichens und eines Absolutwerts eines Ausgangssignals aus dem Speicherabschnitt (91, 92), um ein vorbestimmtes Signal auszugeben.

3. Regler (1) nach Anspruch 1, wobei der Überintegrationsberechnungsabschnitt (16) aus dem Grenzabweichungssignal in einem früheren Steuerzyklus und dem Geschwindigkeitsintegrationsregelungssignal in einem früheren Steuerzyklus entweder "0", wenn beide Signale unterschiedliche Vorzeichen haben, oder den kleineren Absolutwert der beiden Signale, wenn die Signal dasselbe Vorzeichen haben, auswählt, um ein früheres Überintegrationssignal zu berechnen.

4. Regler (1) nach Anspruch 1, wobei der Regelungsberechnungsabschnitt (14) umfasst:
einen Geschwindigkeitsintegrationsregelungsabschnitt (21) zum Ausgeben eines Geschwindigkeitsintegrationsregelungssignals auf Grundlage einer Abweichung;
einen Geschwindigkeitsregelungsabschnitt (22), bei dem es sich nicht um den Geschwindigkeitsintegrationsregelungsabschnitt handelt, zum Ausgeben eines ersten Geschwindigkeitsregelungssignals auf Grundlage einer Abweichung;
einen Addiergliedabschnitt (23) zum Bestimmen eines zweiten Geschwindigkeitsregelungssignals durch eine Operation bestehend aus "das Geschwindigkeitsintegrationsregelungssignal + das erste Geschwindigkeitsregelungssignal - das frühere Überintegrationssignal"; und
ein Integrierglied (24) zum Umwandeln des zweiten Geschwindigkeitsregelungssignals in ein Betriebssignal, das als Stellungssignal dient.

5. Regler (1) nach Anspruch 1, wobei der Regelungsberechnungsabschnitt umfasst:
einen Stellungsintegrationsregelungsabschnitt (32), zum Ausgeben eines Geschwindigkeitsintegrationsregelungssignals und eines Stellungsintegralregelungssignals auf Grundlage einer Abweichung und zum Ermöglichen, dass das frühere Überintegrationssignal einen in ihm selbst gespeicherten Integralwert korrigiert;
einen Stellungsregelungsabschnitt (31), bei dem es sich nicht um den Stellungsintegrationsregelungsabschnitt (32) handelt; und
einen Addiergliedabschnitt (34), zum Addieren eines aus einem Stellungsregelungsabschnitt (31), bei dem es sich nicht um den Stellungsintegrationsregelungsabschnitt (32) handelt, gelieferten ersten Stellungsregelungssignals zum Stellungsintegralregelungssignal, um ein zweites Stellungsregelungssignal zu berechnen, und zum Ausgeben des zweiten Stellungsregelungssignals als Betriebssignal.

6. Regler nach Anspruch 5, wobei der Stellungsintegrationsregelungsabschnitt einen Verstärkungsabschnitt zum Ausgeben eines Geschwindigkeitsintegrationsregelungssignals umfasst, indem eine Abweichung, die sich aus einer Subtraktion eines Prozesswerts von einem Zielwert ergibt, mit einer vorbestimmten Verstärkung multipliziert wird, und ein Signal integriert, das sich aus einer Subtraktion des früheren Überintegrationssignals vom Geschwindigkeitsintegrationsregelungssignal ergibt, um dadurch ein Stellungsintegralregelungssignal zu bestimmen.

7. Regler (1) nach Anspruch 5, wobei der Stellungsintegrationsregelungsabschnitt (31) umfasst:
einen Verstärkungsabschnitt (41) zum Ausgeben eines Geschwindigkeitsintegrationsregelungssignals, indem eine Abweichung, die sich aus einer Subtraktion eines Prozesswerts von einem Zielwert ergibt, mit einer vorbestimmten Integralverstärkung multipliziert wird;
einen Subtrahiergliedabschnitt (42) zum Subtrahieren, und zwar von der Abweichung, eines Signals, das durch eine Multiplikation des früheren Überintegrationssignals mit einem Reziprokwert der vorbestimmten Integralverstärkung erhalten wird; und
ein verstärkungsausgerüstetes Integrierglied (43) zum Erfassen eines Ausgangs aus dem Subtrahiergliedabschnitt (42), zum Multiplizieren des Ausgangs mit der vorbestimmten Integralverstärkung, und zum Integrieren des sich ergebenden Ausgangs, um ein Stellungsintegralregelungssignal auszugeben.

8. Regler (1) nach Anspruch 1, wobei der Ausgangsbegrenzungsabschnitt umfasst:
eines oder mehrere in Reihe geschaltete Begrenzungsbauteile (61, 62) zum Empfangen des Betriebssignals und zum Ausgeben eines begrenzten Betriebssignals an das gesteuerte Ziel (2); und
einen Subtrahiergliedabschnitt (63) zum Bestimmen eine Grenzabweichungssignal, indem das begrenzte Betriebssignal vom Betriebssignal zur Ausgabe an den Überintegrationsberechnungsabschnitt (16) subtrahiert wird.

9. Regler (1) nach Anspruch 1, wobei der Ausgangsbegrenzungsabschnitt umfasst:
ein oder mehrere in Reihe geschaltete Begrenzungsbauteile (61, 62) zum eingeschränkten Ausgeben des Betriebssignals;
einen ersten Quantisiergliedabschnitt (64) zum Ermöglichen, dass ein möglicher Wert eines Ausgangssignals aus dem einen oder den mehreren in Reihe geschalteten Begrenzungsbauteil/en (61, 62) innerhalb eines Bereichs integraler Vielfacher eines vorbestimmten Werts beschränkt und quantisiert wird, und zum Ausgeben eines quantisierten Betriebssignals an das gesteuerte Ziel;
einen zweiten Quantisiergliedabschnitt (65) zum Empfangen des Betriebssignals, zum Quantisieren des Signals unter einer selben Bedingung wie einer Bedingung im ersten Quantisiergliedabschnitt, und zum Ausgeben eines quantisierten Betriebssignals; und
einen Subtrahiergliedabschnitt (63) zum Bestimmen eines Grenzabweichungssignals durch Subtrahieren eines Ausgangs des ersten Quantisiergliedabschnitts (64) von einem Ausgang des zweiten Quantisiergliedabschnitts (65) zur Ausgabe an den Überintegrationsberechnungsabschnitt (16).

10. Regler (1) nach Anspruch 8 oder 9, wobei der Regler (1) umfasst:
einen ersten Höchstwertauswahlabschnitt (17) zum Durchführen einer Vorrangauswahlverarbeitung an einem Zielwert, der durch ein auf höherer Ebene befindliches System gegeben ist, und einem Mindestgarantiezielwert, und zum Ausgeben eines ausgewählten Zielwerts an einem Regelungsberechnungsabschnitt (14);
einen SVMV-Umwandlungsabschnitt (18) zum Umwandeln des Mindestgarantiezielwerts in ein Mindestgarantiebetriebssignal; und
einen Ausgangsbegrenzungsabschnitt (15), der einen zweiten Höchstwertauswahlabschnitt (66) enthält, wobei der zweite Höchstwertauswahlabschnitt (66) zumindest eine Vorrangauswahlverarbeitung an einem Eingangssignal des einen Bauteils oder der mehreren in Reihe geschalteten Bauteile (61, 62) und dem Mindestgarantiebetriebssignal durchführt.

11. Regler (1) nach einem der Ansprüche 8 bis 10, wobei das eine oder die mehreren in Reihe geschalteten Bauteil/e einen Ober- und Untergrenzenbeschränkungsabschnitt (61) umfasst/umfassen, um zumindest eine Amplitude eines Eingangssignals in einem vorbestimmten Bereich zur Ausgabe einzuschränken.

12. Regler (1) nach einem der Ansprüche 8 bis 10, wobei das eine oder die mehreren in Reihe geschalteten Bauteil/e (61, 62) einen Veränderungsratenbegrenzungsabschnitt (62) umfasst/umfassen, um zumindest eine Veränderungsrate in einem Eingangssignal in einem vorbestimmten Bereich zur Ausgabe einzuschränken.

13. Regler (1) nach Anspruch 4, darüber hinaus einen SVMV-Umwandlungsabschnitt (18) zum Umwandeln eines Zielwerts in ein manuelles Betriebssignal umfassend, und wobei der Regelungsberechnungsabschnitt (14) einen Addiergliedabschnitt (23) zum Verwenden eines manuellen Schaltsignals umfasst, um zumindest eine Operation bestehend aus "ein manuelles Betriebssignal - ein Betriebssignal in einem früheren Berechnungszyklus" während eines manuellen Betriebs durchzuführen, und das zweite Geschwindigkeitsregelungssignal in ein vorbestimmtes, im Subtrahiergliedabschnitt berechnetes Signal umwandelt.

14. Regler (1) nach Anspruch 6, darüber hinaus einen SVMV-Umwandlungsabschnitt (18) zum Umwandeln eines Zielwerts in ein manuelles Betriebssignal umfassend, und wobei der Regelungsberechnungsabschnitt (14) einen Subtrahiergliedabschnitt (23) zum Verwenden eines manuellen Schaltsignals umfasst, um zumindest eine Operation bestehend aus "ein manuelles Betriebssignal - ein Betriebssignal in einem früheren Steuerzyklus - das erste Stellungsregelungssignal" während eines manuellen Betriebs durchzuführen, und das zweite Stellungsreglungssignal in ein vorbestimmtes, im Subtrahiergliedabschnitt (23) berechnetes Signal umwandelt.

## Revendications

1. Régulateur (1), comprenant :
une partie calcul de régulation (14) destinée à calculer et sortir un signal d'opération pour faire en sorte qu'une valeur de processus provenant d'une cible commandée (2) se conforme à une valeur cible ; et
une partie limitation de sortie (15) destinée à restreindre le signal d'opération provenant de la partie calcul de régulation (14) en vue d'une sortie à destination de la cible commandée (2),
où la partie calcul de régulation (14) comprend au moins une partie régulation par intégration de type vitesse ou une partie régulation par intégration de type position, et
la partie limitation de sortie (15) comprend une fonction destinée à sortir un signal d'écart de limite indiquant un degré d'écart par rapport à une limite prédéterminée, une limite supérieure et une limite inférieure restreignant la magnitude du signal d'opération,
**caractérisé en ce que** :
le régulateur (1) comprend une partie calcul d'intégration excessive (16) destinée à déterminer un degré d'écart d'un signal d'opération causé par une opération intégrale, parmi des signaux d'opération contenus dans le signal d'écart de limite dans un cycle de commande antérieur, sur la base d'un signal de régulation par intégration de type vitesse fourni depuis la partie calcul de régulation (14) et du signal d'écart de limite fourni depuis la partie limitation de sortie (15), et destinée à sortir un signal résultant comme signal d'intégration excessive antérieure ; et
la partie calcul de régulation (14) comprend une fonction apte à éliminer l'intégration excessive antérieure en soustrayant le signal d'intégration excessive antérieure (ARW[n]) d'un signal d'entrée à destination d'un intégrateur (24) de la partie calcul de régulation (14).

2. Le régulateur (1) selon la revendication 1, où la partie calcul d'intégration excessive (16) comprend :
une partie stockage (91, 92) destinée à stocker une valeur antérieure du signal de régulation par intégration de type vitesse et une valeur antérieure du signal d'écart de limite ; et
une partie sélection de valeur minimum absolue (93) destinée à comparer une valeur à signe et une valeur absolue d'un signal de sortie provenant de la partie stockage (91, 92) pour sortir un signal prédéterminé.

3. Le régulateur (1) selon la revendication 1, où, à partir du signal d'écart de limite dans un cycle de commande antérieur et du signal de régulation par intégration de type vitesse dans un cycle de commande antérieur, la partie calcul d'intégration excessive (16) sélectionne soit "0" si les deux signaux ont des signes différents, soit la plus petite valeur absolue des deux signaux si les signaux ont le même signe afin de calculer un signal d'intégration excessive antérieure.

4. Le régulateur (1) selon la revendication 1, où la partie calcul de régulation (14) comprend :
une partie régulation par intégration de type vitesse (21) destinée à sortir un signal de régulation par intégration de type vitesse sur la base d'un écart ;
une partie régulation de type vitesse (22), autre que la partie régulation par intégration de type vitesse, destinée à sortir un premier signal de régulation de type vitesse sur la base d'un écart ;
une partie additionneur (23) destinée à déterminer un deuxième signal de régulation de type vitesse via une opération comme suit : "le signal de régulation par intégration de type vitesse + le premier signal de régulation de type vitesse - le signal d'intégration excessive antérieure" ; et
un intégrateur (24) destiné à convertir le deuxième signal de régulation de type vitesse en un signal d'opération servant de signal de type position.

5. Le régulateur (1) selon la revendication 1, où la partie calcul de régulation comprend :
une partie régulation par intégration de type position (32) destinée à sortir un signal de régulation par intégration de type vitesse et un signal de régulation intégrale de type position sur la base d'un écart et destinée à faire en sorte que le signal d'intégration excessive antérieure corrige une intégrale stockée dans celle-ci ;
une partie régulation de type position (31) autre que la partie régulation par intégration de type position (32) ;
une partie additionneur (34) destinée à additionner un premier signal de régulation de type position fourni depuis une partie régulation de type position (31) autre que la partie régulation par intégration de type position (32) au signal de régulation intégrale de type position pour calculer un deuxième signal de régulation de type position et sortir le deuxième signal de régulation de type position comme signal d'opération.

6. Le régulateur selon la revendication 5, où la partie régulation par intégration de type position comprend une partie gain destinée à sortir un signal de régulation par intégration de type vitesse en multipliant un écart résultant d'une soustraction d'une valeur de processus à partir d'une valeur cible par un gain prédéterminé, et intègre un signal résultant d'une soustraction du signal d'intégration excessive antérieure à partir du signal de régulation par intégration de type vitesse pour déterminer ainsi un signal de régulation intégrale de type position.

7. Le régulateur (1) selon la revendication 5, où la partie régulation par intégration de type position (31) comprend :
une partie gain (41) destinée à sortir un signal de régulation par intégration de type vitesse en multipliant un écart résultant d'une soustraction d'une valeur de processus à partir d'une valeur cible par un gain intégral prédéterminé ;
une partie soustracteur (42) destinée à soustraire, à partir de l'écart, un signal obtenu par une multiplication du signal d'intégration excessive antérieure par une valeur réciproque du gain intégral prédéterminé ; et
un intégrateur à gain (43) destiné à acquérir une sortie provenant de la partie soustracteur (42), multiplier la sortie par un gain intégral prédéterminé, et intégrer la sortie résultante pour sortir un signal de régulation intégrale de type position.

8. Le régulateur (1) selon la revendication 1, où la partie limitation de sortie comprend :
un ou plusieurs composants de limitation connectés en série (61, 62) destiné(s) à recevoir le signal d'opération et à sortir un signal d'opération limité à destination de la cible commandée (2) ; et
une partie soustracteur (63) destinée à déterminer un signal d'écart de limite en soustrayant le signal d'opération limité du signal d'opération en vue d'une sortie à destination de la partie calcul d'intégration excessive (16).

9. Le régulateur (1) selon la revendication 1, où la partie limitation de sortie comprend :
un ou plusieurs composants de limitation connectés en série (61, 62) destiné(s) à sortir de manière restrictive le signal d'opération ;
une première partie quantificateur (64) destinée à faire en sorte qu'une valeur possible d'un signal de sortie provenant de l'un ou des plusieurs composants de limitation connectés en série (61, 62) soit restreinte dans une plage de multiples intégraux d'une valeur prédéterminée et soit quantifiée, et à sortir un signal d'opération quantifié à destination de la cible commandée ;
une deuxième partie quantificateur (65) destinée à recevoir le signal d'opération, quantifier le signal dans une même condition qu'une condition dans la première partie quantificateur, et sortir un signal d'opération quantifié ; et
une partie soustracteur (63) destinée à déterminer un signal d'écart de limite en soustrayant une sortie de la première partie quantificateur (64) d'une sortie de la deuxième partie quantificateur (65) en vue d'une sortie à destination de la partie calcul d'intégration excessive (16).

10. Le régulateur (1) selon la revendication 8 ou 9, où le régulateur (1) comprend :
une première partie sélection de valeur maximum (17) destinée à effectuer une sélection de priorité supérieure s'appliquant à une valeur cible donnée par un système de niveau supérieur et une valeur cible de garantie minimum et à sortir une valeur cible sélectionnée à destination de une partie calcul de régulation (14) ;
une partie conversion SVMV (18) destinée à convertir la valeur cible de garantie minimum en un signal d'opération de garantie minimum ; et
une partie limitation de sortie (15) comprenant une deuxième partie sélection de valeur maximum (66), la deuxième partie sélection de valeur maximum (66) effectuant au moins une sélection de priorité supérieure s'appliquant à un signal d'entrée de l'un ou des plusieurs composants de limitation connectés en série (61, 62) et au signal d'opération de garantie minimum.

11. Le régulateur (1) selon l'une quelconque des revendications 8 à 10, où l'un ou les plusieurs composants de limitation connectés en série comprennent une partie restriction de limite supérieure et inférieure (61) destinée à restreindre au moins une magnitude d'un signal d'entrée au sein d'une plage prédéterminée en vue d'une sortie.

12. Le régulateur (1) selon l'une quelconque des revendications 8 à 10, où l'un ou les plusieurs composants de limitation connectés en série (61, 62) comprennent une partie limitation de taux de changement (62) destinée à restreindre au moins un taux de changement dans un signal d'entrée au sein d'une plage prédéterminée en vue d'une sortie.

13. Le régulateur (1) selon la revendication 4, comprenant en outre une partie conversion SVMV (18) destinée à convertir une valeur cible en un signal d'opération manuelle, et où la partie calcul de régulation (14) comprend une partie soustracteur (23) destinée à utiliser un signal de commutation manuelle pour effectuer au moins une opération comme suit : "un signal d'opération manuelle - un signal d'opération dans un cycle de calcul antérieur" pendant l'opération manuelle, et convertit le deuxième signal de régulation de type vitesse en un signal prédéterminé calculé dans la partie soustracteur.

14. Le régulateur (1) selon la revendication 6, comprenant en outre une partie conversion SVMV (18) destinée à convertir une valeur cible en un signal d'opération manuelle, et où la partie calcul de régulation (14) comprend une partie soustracteur (23) destinée à utiliser un signal de commutation manuelle pour effectuer au moins une opération comme suit : "un signal d'opération manuelle - un signal d'opération dans un cycle de commande antérieur - le premier signal de régulation de type position" pendant l'opération manuelle, et convertit le deuxième signal de régulation de type position en un signal prédéterminé calculé dans la partie soustracteur (23).
